# EUROPEAN PATENT SPECIFICATION

(11) **EP 1 664 413 B1**
(45) Date of publication and mention of the grant of the patent: **03.01.2018**
(21) Application number: 04786129.9
(22) Date of filing: 28.07.2004
(51) Int. Cl.: B32B 3/00, B32B 5/02, B32B 27/04, C08K 5/53, D06M 11/42, D06M 15/33, D06M 15/277, D06M 15/576, D06M 13/236, D06M 16/00

(54) **TREATED TEXTILES AND COMPOSITIONS FOR TREATING TEXTILES**
BEHANDELTE TEXTILIEN UND ZUSAMMENSETZUNGEN ZUR BEHANDLUNG VON TEXTILIEN
TEXTILES TRAITES ET COMPOSITIONS POUR TRAITER DES TEXTILES

(30) Priority: 22.09.2003 US 504756 P; 14.10.2003 US 685318
(43) Date of publication of application: 07.06.2006
(73) Proprietor: Sage Automotive Interiors, Inc., Spartanburg SC 29303 (US)
(72) Inventor: FANG, Xinggao, Duncan, SC 29334 (US); LOCKE, Sidney S., Jr., Greer, SC 29651 (US); MACLURE, Paul, A., Landrum, SC 29356 (US); CHAY, Jason, G., Easley, SC 29642 (US); PURDY, Michelle, Spartanburg, SC 29303 (US)
(74) Representative: Hoffmann Eitle
(86) International application number: PCT/US2004/024282
(87) International publication number: WO 2005/035858

(56) References cited:
- WO-A-2004/063241
- DE-U1- 9 207 695
- US-A- 3 920 614
- US-A- 5 747 392
- US-A1- 2001 021 616
- US-A1- 2003 115 678
- US-B1- 6 251 210
- US-B1- 6 451 717
- US-B1- 6 485 789
- US-B1- 6 610 775

## Description

### Background of the Invention

Fluorocarbon stain resistant textile treatments such as Teflon® are used to impart repellent properties to textile surfaces. Such treatments typically provide limited protection against staining of the textile surface. Once oily stains are pressed into the fibrous structure of a repellent fluorocarbon-treated textile surface, such stains generally cannot reliably be removed from the textile surface.

Antimicrobial textile treatment offers added advantage of reducing or eliminating odor and mildew in textiles by limiting the growth of microbes within a textile. Numerous United States Patents have directed efforts toward the application of antimicrobial treatments for textile or fabric substrates, including, for example, US Pat. Nos. 5,968,207; 6,479,144; 6,024,823; 6,492,001 B1; 6,207,250; 5,565,265; and US 2003/0008585 A1 entitled "Treated Textile Fabric" and US 2001/0021616 A1 entitled "Treated Textile Fabric". Many of the textile fabrics disclosed in these references, however, impart no substantive stain release properties, making them difficult to clean.

Stain release refers generally to the ability of a textile or fabric to release a ground in stain, such as an oil-based stain, from the fabric surface. It would be beneficial if a textile was capable of exhibiting stain repellency to liquid spills, but also function well in stain release. Many prior art treated textiles provide protection in terms of repellency, but fail to provide substantial protection as to stain release. A fabric that could provide repellency to liquids, substantive stain release, and also control the growth of microbes, mold, mildew, and the like, would be highly desirable for many textile surfaces.

A recent U.S. Patent application publication 2003/0008585 A1 to Rubin et al. entitled "Treated Textile Fabric" ("Rubin") discloses compositions and a process for preparing a treated textile fabric. In general, the fabric comprises 6-12 wt.-% of a fluorochemical textile treating agent, which forms a relatively heavy film on the fabric. However, a textile containing such a relatively large percentage of textile treating agent may be undesirably stiff or have a relatively low degree of hand.

Further, such chemicals are costly when applied in such amounts. Using relatively large amounts of such treating agents upon a fabric surface may reduce softness, which is undesirable. Also, such fabrics have poor soil and stain release characteristics.

### Detailed Description of the Invention

Surprisingly, it has been discovered that certain compositions are capable of affording to a textile surface good liquid repellency, while also imparting substantive stain release. Furthermore, bacterial growth simultaneously is controlled by the use of antimicrobial components or agents. A crosslinking component is also employed in the composition.

Thus, the present invention provides a treated textile comprising
(a) a textile substrate;
(b) applied on one side of the substrate, a composition comprising
   (i) a fluorochemical-containing soil release component;
   (ii) an antimicrobial agent; and
   (iii) a crosslinking component;
   which composition comprises the component (i) in an amount of less than 6 wt.-%, based on the weight of the composition; and
(c) applied on the other side of the substrate, an electrically conductive coating.

Such treatments provide long lasting effects, that is, textiles so treated are in general durable to normal use, such as wear and tear. The advantageous properties as described will last even after many cleanings and long term uses. Furthermore, it is possible to provide such advantageous effects without forming a heavy film on such textile articles. The applications of the invention use less than 6 wt.-% of fluorocarbon as a percentage of the total or primary treatment composition.

### Definitions and Terms

"Water repellency" and "oil repellency" are generally defined as the ability of a substrate to block water and oil from penetrating into the substrate, respectively.

For example, the substrate may be a textile substrate which is capable of blocking water and oil from penetrating into the fibers of the textile substrate.

"Stain and soil release" generally refers to the degree to which a stained substrate approaches its original, unstained appearance as a result of a care procedure.

The terms "stain or soil resistant composition or stain or soil resistant treatment" as used herein refer to any treatment or composition that imparts stain resistance to fibers, particularly polyester or blends.

"Durability" is generally defined as the ability of a substrate to retain an acceptable level of a desired function through a reasonable number of cleaning or wear cycles. More specifically, durability, as described herein, describes a substrate that maintains adequate properties of stain resistance, water repellency, oil repellency, and soil release over the life of the product. This substrate may be a textile substrate, such as, for example, a polyester textile fabric, or alternatively may be a carpet, or yet another textile material.

The terms "fluorocarbons," "fluoropolymers," and "fluorochemicals" may be used interchangeably herein and each represents a polymeric material containing at least one fluorinated segment.

"Hydrophilic" is defined as having a relatively strong affinity for or ability to absorb water.

"Hydrophobic" is defined as lacking affinity for or the ability to absorb water.

### Soil (Stain) Release Component

Soil (or stain) release agents in the present invention are fluorochemical-containing soil release components which, for example, include fluorinated esters, urethanes and (meth)acrylates, and fluorinated stain release polymers, or combinations thereof. Specific commercially available examples of soil release components include, without limitation, Repearl SR-1100™ (available from Mitsubishi International Corporation), Bayard SOC™ (from Bayer), Zonyl 7910(TM), 9200™ (from Ciba Corporation), TG993™ (from Daikin Corporation), FC 248™, and PM 490™ (3M Company).

### Antimicrobial Component

The terms "antimicrobial component" or "antimicrobial agent" are intended to encompass any compound which exhibits antimicrobial activity. The antimicrobial agent comprises, in one embodiment of the invention, one or more of the following: silver-containing resins, silver-containing zeolites, silver-containing glass, silver-based ion exchange compounds, inorganic antimicrobial materials, metal based zeolites, metal salts, metal oxides, metal hydroxides, transition metal ions, triclosan, pyrithione and derivatives, tributyl tin oxide derivatives, 3-iodo-2-propylbutyl carbamate, n-butyl-1, 2 benz-iso thiazoline, 10, 10'-oxybisphenoxiarsine, sodium o-phenylphenate, and others, to name only some of the possible choices that may be employed.

In many applications, it will be desirable to employ silver-based ion-exchange compounds, a silver-based zeolite, or a silver-based glass, and any combinations thereof. One silver-based ion exchange material is an antimicrobial silver zirconium phosphate (RC-5000®) available from Milliken & Company, under the tradename ALPHASAN.

Generally, such a metal compound may be added in an amount of 0.00001-10 % by total weight of the particular latex composition; or alternatively 0.001-5 %; or otherwise, 0.01-1%; and also 0.1-1.0%.

Antimcrobial agents such as Ultrafresh NM™ and Ultrafresh DM-50™, DM-25™ (from Thompson Associates), RC-5000™ (from Milliken Chemical), Chitosante™ (VAG Bioscience, Inc. R.O.C., Taiwan), Kathon LM™ (from Rohm and Haas Company), Zinc Omadine (from Arch Chemical), Reputex 20™ (from Avecia), AM 5700™ (Dow Corning), Amical 48™ (Dow Chemical Co.), also may be employed. In many applications, Zinc Omadine or Sodium Omadine are very effective antimicrobial agents.

### Crosslinking Component

Cross-linking components employed in the invention, include cross-linking components that are essentially insoluble in water, which also are known as hydrophobic. In other formulations, hydrophilic crosslinkers are useful.

In one embodiment of the invention, the use of crosslinking components comprises of one or more of the following: melamine formaldehydes and derivatives, epoxides, and anhydrides and derivatives thereof.

In other embodiments, examples of hydrophobic cross-linking components include protected derivatives of isocyanates or combinations thereof. Protected diisocyanates may be the suitable cross-linking components. Monomers or polymers containing two or more blocked isocyanate compounds may be the most preferred cross-linking components. One useful cross-linking component is REPEARL(R) MF™, also available from Mitsubishi Corp. Others include ARKOPHOB® DAN, available from Clariant, and HYDROPHOBOL® XAN™, available from DuPont.

### Optional Repellent Components

There are numerous compositions that may be adapted to serve as the repellent component in the present invention. One that is particularly useful is a fluorochemical composition. Numerous fluorochemical compositions are known to be capable of achieving repellency on a fibrous substrate. The 3M Company produces a product line of fluorochemical compositions, including Scotchgard™ and the like, that can be employed. Furthermore, DuPont's Zonyl™ product line is also a candidate for the repellency component of the invention. Other products distributed by Daikin America, Inc. and Mitsubishi International Corporation, each of Japan could be employed, as well as others. REPEARL® F-8025, manufactured by Mitsubishi International Corporation may be used as well. Fluoroacrylates and urethane derivatives may be employed. Esters, (meth)acrylic amides oligomers and polymers also may be employed.

### Generation of a Static Dissipative Fabric or Textile

The invention employs materials necessary to make a static dissipative textile having an electrically conductive surface. This may be achieved by first applying a fluorochemical, an antimicrobial agent, (separately or together, in any order) a crosslinker and optionally a repellent, followed by the application of a static dissipative material. The electrically conductive surface may be achieved by screen printing the fabric with an electrically conductive coating, wherein the conductive coating includes a conducting agent and a binding agent, and optionally a dispersing agent and/or a thickening agent. The fabric may be coated in any pattern which achieves the desired static dissipative property for the fabric end-use. The fabric may be coated on one or both sides as determined generally by the end-use of the fabric by considering the desired appearance of the coated fabric or the conductive performance of the coated fabric. The resulting electrically conductive fabric may be suitable in end-use applications such as automotive upholstery and other automotive interior fabrics, such as door panels, armrests, headrests, commercial and/or residential upholstery; cleanroom garments, wipes and/or other cleanroom accessories such as mops, napery, and apparel.

In one embodiment of the invention, it may be possible to achieve a composite material, wherein a static dissipative textile may further comprise at least one layer of a second fabric disposed adjacent to the electrically conductive coating. The second fabric may be woven, knitted, or nonwoven fabric. Alternatively, the static dissipative textile may further comprise at least one layer of foam material disposed adjacent to the electrically conductive coating. The composite material may further include one or more layers of woven, knitted, or nonwoven fabric; one or more layers of film; one or more layers of adhesive; and combinations thereof.

The composite material may be used, for example, in automobile interiors, such as in automotive upholstery, wherein the upholstery fabric is adhered to a foam backing through the use of adhesive, heat lamination, or the like. The composite material may be applicable for use in other areas such as, for example, in residential or commercial upholstery or in carpeting.

It is also an object of the current invention to achieve a method for producing a static dissipative textile having an electrically conductive surface. The method generally comprises the steps of providing a knitted, woven, or nonwoven fabric, coating one or both sides of the fabric with an electrically conductive coating in a pattern comprised of lines, and drying the fabric. The fabric may then be exposed to one or more mechanical and/or chemical textile finishing processes known to those skilled in the art.

A static dissipative textile is provided which has relatively permanent anti-static properties which are achieved at substantially all relative humidities without significantly compromising the textile hand (or feel) of the textile or the surface appearance of the textile. The static dissipative textile generally comprises a fabric coated on at least on side with a pattern of an electrically conductive coating.

### Textile Substrates

Textiles substrates employed in the practice of the invention which are to be treated may be synthetic, natural, and/or blends. They can be woven, knit, carpet or nonwoven. The composition(s) may be applied to textile substrates by generally known methods such as immersion, foam, spray, exhaustion, and coating. Such compositions can be applied to either side or both sides of the textile substrates. Such compositions could also have one or more components applied to the substrate, followed by other or all components. In addition, such compositions could have one or more components applied to one side of the substrates, and other or all components applied to either side of the substrates.

The fabric of the current invention can be formed from fibers such as synthetic fibers, natural fibers, or combinations thereof. Synthetic fibers include, for example, polyester, acrylic, polyamide, polyolefin, polyaramid, polyurethane, regenerated cellulose, and blends thereof. More specifically, polyester includes, for example, polyethylene terephthalate, polytriphenylene terephthalate, polybutylene terephthalate, polylatic acid, and combinations thereof. Polyamide includes, for example, nylon 6, nylon 6,6, and combinations thereof. Polyolefin includes, for example, polypropylene, polyethylene, and combinations thereof. Polyaramid includes, for example, poly-p-phenyleneteraphthalamid (i.e., Kevlar®), poly-m-phenyleneteraphthalamid (i.e., Nomex®), and combinations thereof. Natural fibers include, for example, wool, cotton, flax, and blends thereof.

The fabric can be formed from fibers or yarns of any size, including microdenier fibers and yarns (fibers or yarns having less than one denier per filament). Furthermore, the fabric may be partially or wholly comprised of multi-component or bi-component fibers or yarns which may be splittable along their length by chemical or mechanical action. The fabric may be comprised of fibers such as staple fiber, filament fiber, spun fiber, or combinations thereof.

Additional textile treatments can be applied together or separately on either side of textile substrates. Examples include durable press resins and catalysts, sewing lubricants, softeners, antistatic treatments, flame-retardants, and light stabilizers.

### Test Methods

Liquid or stain resistant properties may be measured using water and oil repellency tests.
a) Water Repellency may be tested according to the 3M Water Repellency Test II (May, 1992). The rating scale is 1-10, with "1" indicating the poorest degree of repellency (substrates having higher surface energy) and "10" indicating the best degree of repellency (substrates having lower surface energy). The 3M water repellency scale is:
   - 1 is 10% IPA, 90% water
   - 2 is 20% IPA, 80% water
   - 3 is 30% IPA, 70% water
   - 4 is 40% IPA, 60% water
   - 5 is 50% IPA, 50% water
   - 6 is 60% IPA, 40% water
   - 7 is 70% IPA, 30% water
   - 8 is 80% IPA, 20% water
   - 9 is 90% IPA, 10% water
   - 10 is 100% IPA
b) Oil Repellency may be tested according to the AATCC Test Method 118-1983. The rating scale is 1-8, with "1" indicating the poorest degree of repellency (substrates having higher surface energy) and "8" indicating the best degree of repellency (substrates having lower surface energy). The oil repellency scale is:
   - 1 is NUjol™ Mineral Oil
   - 2 is 65/35 Nujol/n-hexadecane (by volume)
   - 3 is n-hexadecane
   - 4 is n-tetradecane
   - 5 is n-dodecane
   - 6 is n-decane
   - 7 is n-octane
   - 8 is n-heptane
c) Stain release properties may be measured by using a spot cleaning procedure. Oily stains such as corn oil and tanning oil were pressed into the textile substrate using the staining procedure described in AATCC Test Method 130-1981; as modified herein. The stained textile was left at room temperature for 24 hours. A piece of paper towel was used to wipe off excess stains at the surface of the texitle. Then 4 drops of fabric cleaner (such as Zout) were gently worked into the stained area. The textile was left for 5 minutes at room temperature. Finally the stained areas were scrubbed with approximate 10.2 cm by 10.2 cm (4" by 4") polycotton cloths for about 40 seconds and then rinsed with generous amount of warm water. Excess water was blotted off with a paper towel. After the cleaned textile was air dried at room temperature, stain release performance was rated against the rating replica of AATCC 130-1981 with a rating scale from 1 to 5 with 5 to be the best.

Generally a rating of 3.5 and above is considered to have good soil/stain release property.

### Antimicrobial Testing

Antimicrobial properties (bacteria and fungi) may be tested using modified AATCC Method 147, also known as the Parallel Streak Method, as further defined below.

In the Parallel Streak Method, an agar surface is inoculated, thereby making it easier to distinguish between the test organism and contaminant organisms that may be present on the unsterilized specimen. The Parallel Streak Method has proven effective in providing evidence of antibacterial activity against Gram positive and Gram negative bacteria.

A Zone of Inhibition (mm) and growth under the fabric were used to gauge antimicrobial properties of the textile substrates. Generally no growth under the substrate and/or a clear zone of inhibition (ZOI) around the substrates indicates good antimicrobial properties.

### Zone of Inhibition

Migration of the antimicrobial was assessed with the Zone of Inhibition assay. Petri plates containing Tryptic Soy Agar were inoculated with 0.5 ml of a diluted overnight culture approximately 5E5 cells/ml in Na/K phosphate buffer of the test microbe. Samples were tested against Klebsiella pneumoniae ATCC No. 4362 and Staphylococcus aureus ATCC No. 6538, and A. niger (a fungus). A sample approximately 1*1 inch is placed in the center of the plate. The agar plate was incubated for 24 hours at 35°C. The final data is the average of the inhibition zone measured on four sides of the sample and description of the degree of growth underneath the sample.

Efficacy was assessed with a Zone of Inhibition assay against Aspergillus niger ATCC #6275. Petri plates containing Sabouraud Dextrose Agar were inoculated with 0.5 ml of 1 E5 fungal spores/ml. A sample approximately 2.54*2.54 cm (1*1 inch) is placed in the center of the plate. The agar plate was incubated for 1-7 days at 250°C. The final data is the average of the inhibition zone measured on four sides of the sample and description of the degree of growth underneath the sample.

### Chemical Concentration

In the practice of the invention, the percentage of fluorochemical-containing component in the overall treating composition is less than 6 wt.-%, and commonly 0.5-3 wt.-%, of the treating composition, . In one particular embodiment, the percentage is 1-2 wt.-%.

With regard to the percentage of pickup in the application of the invention, the pickup usually is 50-70 %pickup of the fluorocarbon component, but it is certainly possible to employ the invention at a pickup percentage that is outside of that range.

### Invention Example 1

A piece of woven polyester fabric was immersed in an aqueous bath that contained, on weight basis:
2.0% Unidyne TG-993,
0.25% Arkophob DAN, and
1.0% RC5000.

The fabric was passed through a nip with 275.8 kPa (40 psi) pressure to remove excess of moisture. Then the fabric was dried completely in a typical dispatch oven at 182.2°C (360°F) for approximate 4 minutes. The fabric was cooled and subject to water and oil resistance and stain release tests as specified above.

The percentage of wet pickup employed was about 50-70 %, so that the actual weight of the fluorocarbon-containing component was about 1-1.4 wt.-% of the treating composition.

### Invention Example 2

This example was prepared as in Example 1, except that 1.0% of Zinc Omadine fps dispersion (from Arch Chemical) was used in place of the RC5000.

### Invention Example 3

This example was prepared as in Example 1 except that the chemical bath contained:
1.25% Unidyne TG-993,
1.0% Repearl F8025
1.0% of Zinc Omadine fps dispersion, and
0.25% of Arkophob DAN.

### Comparative Example 4

This example was prepared as in Example 3 except that no Arkophob® DAN was used.

### Invention Example 5

This example was prepared as in Example 4 except that the chemical bath contained:
1.25% Unidyne TG-992,
1.0% Repearl F7105, and
1.0% Zinc Omadine fps dispersion.

### Comparative Example 6

Same as example 1 except that neither hydrophobic crosslinker Arkophob® DAN nor antimicrobial agent RC5000 was used.

### Comparative Example 7

The same procedure and materials were employed as in example 1 except that no RC5000 was used.

### Comparative Example 8

Same as Example 1 except that Repearl F8025 was used in place of Unidyne TG-993.

### Example 9

### Prior Art

The fabric is Crypton™ 404 obtained from C.F. Stinson and Company of Rochester Hills, Michigan (a distributor of Hi-Tex Crypton brand textiles). This is a commercial product based upon the teachings of U.S. Pat. Nos. 6,024,823, 6,492,001 B1, and 5,565,265 to Rubin et al.

### Example 10

### Prior Art

Same as Example 10 except that Crypton(TM) 61238 from C.F. Stinson was used instead of Crypton(TM) 404.

### Example 11

### Control

This example used a textile treated only with water, to test the baseline antimicrobial activity.

**TABLE 1: Results**

| Examples | Ex. 1 | Ex. 2 | Ex. 3 | Ex.4 | Ex.5 | Ex.6 | Ex.7 | Ex.8 | Ex.9 | Ex. 10 | Ex. 1 |
|---|---|---|---|---|---|---|---|---|---|---|---|
| Oil Repellence | 6 | 6 | 6 | 6 | 6 | 6 | 6 | 7 | 6 | 2 | X |
| Water Repellence | 3 | 3 | 8 | 5 | 4 | 0* | 3 | 10 | 9 | 6 | X |
| Corn oil release | 4.5 | 5.0 | 4.5 | 4.5 | 4.5 | 5.0 | 5.0 | 4.5 | 2.0 | 2.0 | X |
| Burned motor oil release | 4.5 | 4.5 | 4.5 | 3.5 | 3.5 | 5.0 | 4.5 | 1.0 | 1.0 | 1.0 | 1.0 |
| | Inhibition (mm)//Growth Under (yes/no) | | | | | | | | | | |
| S. aureus | 0//no | 4.3//no | 0.5//no | 6.5//no | //no | 0//yes | 0//yes | 0//yes | 0//yes | 3//no | 0//yes |
| K. pneumoniae | 1.8//no | 8.3//no | 3.8//no | 7.8//no | //no | 0//yes | 0//yes | 0//yes | 0//yes | 1//no | 0//yes |
| A. niger | 0//yes | 0//no | 0//no | 5.8//no | //no | 0//yes | 0//yes | 0//yes | 0//yes | x | 0//yes |

| | | | | | | | | | | | |
|---|---|---|---|---|---|---|---|---|---|---|---|
| Note. *failed to repel water. | | | | | | | | | | | |

More inventive examples are disclosed below with results listed in Table 2. These examples demonstrate that various other compositions and ratios of chemical compositions could afford equally good repellency and release features to the treated textiles.

### Invention Example 12

An example was prepared as in example 1 except that the chemical bath comprised:
2.0% Unidyne TG-993,
1.0% Arkophob DAN, and
0.23% RC5000.

The wet pickup was adjusted to 65%.

### Invention Example 13

The example was prepared as in example 12 except that 0.48% Zinc Omadine was used in place of RC5000 as the antimicrobial component/agent.

### Comparative Example 14

The example was prepared as in example 12 except that 2.0% Repearl F7105 was used in place of Unidyne TG-993.

### Comparative Example 15

The example was prepared as in example 12 except that the chemical bath contained the following:
10.0% Zonyl 7040,
0.25% Aerotex M3, and
0.60% Ultrafresh DM-25.

**TABLE 2: Results**

| Examples | Ex. 12 | Ex. 13 | Ex. 14 | Ex. 15 |
|---|---|---|---|---|
| Oil Repellence | 7 | 6 | 6 | 7 |
| Water Repellence | 5 | 3 | 10 | 10 |
| Corn oil release | 4.0 | 4.0 | 2.0 | 1.5 |
| Burned motor oil release | 4.0 | 4.0 | 2.0 | 1.0 |
| | Inhibition (mm)//Growth Under (yes/no) | | | |
| S. aureus | 0//no | 8.8//no | 0//yes | 0//yes |
| K. pneumoniae | 0//no | 10.3//no | 0//yes | 0//yes |

### Abrasion Testing

Fabrics from examples 12 to 17, as indicated below, were abraded 5000 cycles using a Martindale abrasion Tester by ASTM D 4966-98@12 kpa. Repellency and release properties were measured again in the same manner as un-abraded samples. Results are listed in Table 2A, below.

**TABLE 2A: After Abrasion Results**

| Examples | Ex. 12 | Ex. 13 | Ex. 14 | Ex. 15 |
|---|---|---|---|---|
| Oil Repellence | 4 | 3 | 2 | 4 |
| Water Repellence | 2 | 2 | 4 | 7 |
| Corn oil release | 5.0 | 4.5 | 3.5 | 1.5 |
| Burned motor oil release | 4.5 | 4.0 | 2.0 | 1.5 |

It was found that the compositions of the invention when applied to a textile result in better repellency at lower concentrations on the fabric. Lesser amounts of treating agent than that which is known in the art may be used in the practice of the invention. Further, superior soil release can be obtained by employing compositions of the invention. Less fluorocarbon-containing material was required in the practice of the invention, as compared to prior art compositions.

It is understood by one of ordinary skill in the art that the present discussion is a description of exemplary embodiments only, and is not intended as limiting the broader aspects of the present invention, which broader aspects are embodied in the exemplary constructions. The invention is shown by example in the appended claims.

## Claims

1. A treated textile comprising
(a) a textile substrate;
(b) applied on one side of the substrate, a composition comprising
(i) a fluorochemical-containing soil release component;
(ii) an antimicrobial agent; and
(iii) a crosslinking component;
which composition comprises the component (i) in an amount of less than 6 wt.-%, based on the weight of the composition; and
(c) applied on the other side of the substrate, an electrically conductive coating.

2. The treated textile of claim 1, wherein the composition (b) consists of the components (i), (ii) and (iii).

3. The treated textile of claim 1, wherein the composition (b) further comprises (v) an antistatic component.

4. The treated textile of claim 3, wherein the antistatic component (v) comprises a graphite-containing material.

5. The treated textile of any of the preceding claims, wherein in the composition (b) the soil release component (i) comprises a polymeric material selected from (meth)acrylate-containing polymers, urethane-containing polymers and fluorinated esters.

6. The treated textile of any of the preceding claims, wherein in the composition (b) the antimicrobial agent (ii) comprises an agent selected from organic antimicrobial agents, silver-containing resins, silver-containing zeolites, silver-containing glass, silver-based ion exchange compounds, triclosan, inorganic antimicrobial materials, metal based zeolites, metal salts, metal oxides, metal hydroxides, transition metal ions, zinc oxide, pyrithione and derivatives, tributyl oxide derivatives, 3-iodo-2-propylbutyl carbamate, n-butyl-1,2-benzisothiazoline, 10,10'-oxybisphenoxyarsine, and sodium o-phenylphenate.

7. The treated textile of claim 6, wherein the antimicrobial agent (ii) comprises an agent selected from a silver-containing material and a pyrithione-containing material.

8. The treated textile of claim 7, wherein pyrithione-containing material is a zinc pyrithione, preferably zinc omadine.

9. The treated textile of any of the preceding claims, wherein in the composition (b) the crosslinking component (iii) is hydrophobic.

10. The treated textile of claim 9, wherein the hydrophobic crosslinking component (iii) comprises an isocyanate derivative, preferably a blocked isocyanate.

11. The treated textile of any of claims 1-10, wherein the composition (c) is applied on textile substrate in form of a pattern of electrically conductive lines.

## Patentansprüche

1. Behandeltes Textil, umfassend
(a) ein Textilsubstrat;
(b) eine auf einer Seite des Substrats aufgetragene Zusammensetzung, umfassend
(i) eine Fluorchemikalien-haltige schmutzabweisende Komponente;
(ii) ein antimikrobielles Mittel; und
(iii) eine Vernetzungskomponente;
worin die Zusammensetzung die Komponente (i) in einer Menge von weniger als 6 Gew.-%, basierend auf dem Gewicht der Zusammensetzung, umfasst; und
(c) eine elektrisch leitende Beschichtung, die auf der anderen Seite des Substrats aufgetragen ist.

2. Behandeltes Textil gemäß Anspruch 1, worin die Zusammensetzung (b) aus den Komponenten (i), (ii) und (iii) besteht.

3. Behandeltes Textil gemäß Anspruch 1, worin die Zusammensetzung (b) ferner (v) eine antistatische Komponente umfasst.

4. Behandeltes Textil gemäß Anspruch 3, worin die antistatische Komponente (v) ein Graphit-haltiges Material umfasst.

5. Behandeltes Textil gemäß mindestens einem der vorangehenden Ansprüche, worin die schmutzabweisende Komponente (i) in der Zusammensetzung (b) ein Polymermaterial umfasst, ausgewählt aus (Meth)acrylat-haltigen Polymeren, Urethan-haltigen Polymeren und fluorierten Estern.

6. Behandeltes Textil gemäß mindestens einem der vorangehenden Ansprüche, worin das antimikrobielle Mittel (ii) in der Zusammensetzung (b) ein Mittel umfasst, ausgewählt aus organischen antimikrobiellen Mitteln, silberhaltigen Harzen, silberhaltigen Zeolithen, silberhaltigem Glas, Silber-basierten Ionenaustausch-Verbindungen, Triclosan, anorganischen antimikrobiellen Materialien, Metall-basierten Zeolithen, Metallsalzen, Metalloxiden, Metallhydroxiden, Übergangsmetallionen, Zinkoxid, Pyrithion und Derivaten, Tributyloxid-Derivaten, 3-Iod-2-propylbutylcarbamat, n-Butyl-1,2-benzisothiazolin, 10,10'-Oxybisphenoxyarsin und Natrium-o-phenylphenat.

7. Behandeltes Textil gemäß Anspruch 6, worin das antimikrobielle Mittel (ii) ein Mittel umfasst, ausgewählt aus einem silberhaltigen Material und einem Pyrithion-haltigen Material.

8. Behandeltes Textil gemäß Anspruch 7, worin das Pyrithion-haltige Material ein Zink-Pyrithion, bevorzugt Zink-Omadin, ist.

9. Behandeltes Textil gemäß mindestens einem der vorangehenden Ansprüche, worin die Vernetzungskomponente (iii) in der Zusammensetzung (b) hydrophob ist.

10. Behandeltes Textil gemäß Anspruch 9, worin die hydrophobe Vernetzungskomponente (iii) ein Isocyanat-Derivat, bevorzugt ein blockiertes Isocyanat, umfasst.

11. Behandeltes Textil gemäß mindestens einem der Ansprüche 1-10, worin die Zusammensetzung (c) in Form eines Musters aus elektrisch leitenden Linien auf das Textilsubstrat aufgetragen wird.

## Revendications

1. Textile traité comprenant
(a) un support de textile;
(b) appliqué sur un côté du support, une composition comprenant
(i) un composant de libération de salissures contenant un composé fluorochimique ;
(ii) un agent antimicrobien ; et
(iii) un composant de réticulation ;
laquelle composition comprend le composant (i) dans une quantité inférieure à 6 % en poids sur la base du poids de la composition ; et
(c) appliqué de l'autre côté du support, un revêtement électriquement conducteur.

2. Le textile traité de la revendication 1, dans lequel la composition (b) consiste en les composants (i), (ii) et (iii).

3. Le textile traité de la revendication 1, dans lequel la composition (b) comprend en outre (v) un composant antistatique.

4. Le textile traité de la revendication 3, dans lequel le composant antistatique (v) comprend un matériau contenant du graphite.

5. Le textile traité de l'une quelconque des revendications précédentes, dans lequel dans la composition (b) le composant de libération de salissures (i) comprend un matériau polymérique choisi parmi les polymères contenant du (méth)acrylate, les polymères contenant de l'uréthane et les esters fluorés.

6. Le textile traité de l'une quelconque des revendications précédentes, dans lequel dans la composition (b) l'agent antimicrobien (ii) comprend un agent choisi parmi les agents antimicrobiens organiques, les résines contenant de l'argent, les zéolites contenant de l'argent, le verre contenant de l'argent, les composés d'échange d'ions à base d'argent, le triclosan, les matériaux antimicrobiens inorganiques, les zéolites à base de métaux, les sels métalliques, les oxydes métalliques, les hydroxydes métalliques, les ions de métaux de transition, l'oxyde de zinc, la pyrithione et ses dérivés, les dérivés d'oxydes tributyliques, le carbamate 3-iodo-2-propylbutylique, la 10,10'-oxybisphénoxyarsine, et le o-phénylphénate de sodium.

7. Le textile traité de la revendication 6, dans lequel l'agent antimicrobien (ii) comprend un agent choisi parmi un matériau contenant de l'argent et un matériau contenant de la pyrithione.

8. Le textile traité de la revendication 7, dans lequel le matériau contenant de la pyrithione est une pyrithione de zinc, de préférence l'omadine de zinc.

9. Le textile traité de l'une quelconque des revendications précédentes, dans lequel dans la composition (b) le composant de réticulation (iii) est hydrophobique.

10. Le textile traité de la revendication 9, dans lequel le composant de réticulation hydrophobique (iii) comprend un dérivé d'isocyanate, de préférence un isocyanate bloqué.

11. Le textile traité selon l'une quelconque des revendications 1-10, dans lequel la composition (c) est appliquée sur le support de textile sous la forme d'un motif de lignes électriquement conductrices.
